(19) Europäisches Patentamt
European Patent Office
Office européen des brevets

(11) **EP 2 287 060 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(51) Int Cl.:
*B60W 30/16* *(2012.01)*    *G05D 1/02* *(2006.01)*
*G01S 13/93* *(2006.01)*

(21) Anmeldenummer: **10008558.8**

(22) Anmeldetag: **17.08.2010**

(54) **Verfahren zur Ermittlung eines Ein- oder Ausschervorgangs eines dem eigenen Kraftfahrzeug vorausfahrenden Fahrzeugs**

Method for determining whether a motor vehicle in front is changing lane

Procédé de détermination d'un processus de changement ou de sortie de fil d'un véhicule se trouvant à l'avant de son propre véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **19.08.2009 DE 102009038078**

(43) Veröffentlichungstag der Anmeldung:
**23.02.2011 Patentblatt 2011/08**

(73) Patentinhaber:
• **Audi AG**
  **85045 Ingolstadt (DE)**
• **Audi Electronics Venture GmbH**
  **85080 Gaimersheim (DE)**

(72) Erfinder:
• **Limbacher, Reimund**
  **85055 Ingolstadt (DE)**

• **Schuberth, Stefan**
  **85057 Ingolstadt (DE)**

(74) Vertreter: **Thielmann, Frank**
  **AUDI AG**
  **Patentabteilung**
  **85045 Ingolstadt (DE)**

(56) Entgegenhaltungen:
**EP-A- 1 577 682    EP-A- 1 643 269**
**EP-A1- 1 455 323    DE-A1-102006 039 104**

• **YOUNG E ET AL: "Improved obstacle detection by sensor fusion" 19920101, 1. Januar 1992 (1992-01-01), Seiten 2/1-2/6, XP006521317**

**Beschreibung**

Die Erfindung betrifft ein Verfahren zur Ermittlung eines Ein- oder Ausschervorgangs eines dem eigenen Kraftfahrzeug vorausfahrenden Fahrzeugs, wobei das eigene Kraftfahrzeug ein der Längsführung dienendes Fahrerassistenzsystem und eine das Fahrzeugvorfeld in Form zweidimensionaler Bilder aufnehmenden Kamera umfasst.

Derartige Fahrerassistenzsysteme zur Längsführung dienen dazu, das eigene Fahrzeug automatisch relativ zu einem vorausfahrenden Fahrzeug zu führen, also beispielsweise einen definierten Abstand einzuhalten oder bei einer Beschleunigung oder Verzögerung des vorausfahrenden Fahrzeugs das eigene Fahrzeug entsprechend nachzuführen etc. Hierzu umfasst ein solches Längsführungssystem, häufig ACC-System (ACC = adaptive cruise control) oder Kollisionsvermeidungssystem genannt, Messsensoren, üblicherweise in Form von Radar- oder Lidarsensoren, die das Fahrzeugvorfeld erfassen und über die ein vor dem eigenen Fahrzeug fahrendes Fahrzeug erkannt werden kann. Um ein für die Längsführung relevantes Objekt bestimmen zu können wird zum einen ein virtueller Fahrschlauch vor dem eigenen Fahrzeug definiert, der die prognostizierte Fahrrichtung des eigenen Fahrzeugs abbildet. Die Objektbestimmung erfolgt nun durch Auswertung des lateralen, also seitlichen Abstands eines vorausfahrenden Fahrzeugs sowie der lateralen Geschwindigkeit dieses Fahrzeugs, also der Geschwindigkeit, mit welcher sich das vorausfahrende Fahrzeug in Richtung der Fahrschlauchbegrenzung bewegt, sei es beim Einscheren oder Ausscheren in oder aus dem Fahrschlauch. Diese Erfassung ist wichtig, nachdem beispielsweise ein einscherendes Fahrzeug als ein solches erkannt werden muss, nachdem dieses sich dann im Fahrschlauch befindliche Fahrzeug als "Regelfahrzeug" nachfolgend zu berücksichtigen ist.

Insbesondere im Nahbereich bis ca. 60 m jedoch werden vorausfahrende Fahrzeuge bei Einschervorgängen erst relativ spät als relevant erfasst, ausscherende Fahrzeuge werden erst relativ spät als ausscherend beurteilt und losgelassen, d. h., dass sie nicht weiter der Regelung zugrunde liegen. Diese relativ späte Reaktion des Fahrerassistenzsystems auf solche Ein- oder Ausscherfahrzeuge resultiert aus Unsicherheiten bei der genauen Spurzuordnung der Objekte zur eigenen Fahrspur, hier also dem virtuellen Fahrschlauch. Dieser virtuelle Fahrschlauch ist zu bilden, nachdem die Messsensoren die Erfassung der eigentlichen Fahrspur nicht zulassen, weshalb Fahrzeugdaten des eigenen Fahrzeugs sowie bekannte Umfelddaten ausgewertet und hieraus ein wahrscheinlicher Fahrschlauch, der also die eigene Fahrtrichtung abbildet, prädiziert wird.

EP 1 577 682 A1 betrifft ein Objektortungssystem für Kraftfahrzeuge mit einer Erkennungseinrichtung für Ein- und Ausschervorgänge. Die Erkennungseinrichtung weist einen Zustandsautomaten auf, der jedem georteten Ort einen von mehreren vordefinierten, auf die Querposition des Objekts bezogenen Zuständen zuweist und die Zustandszuweisungen wiederholt anhand der jeweils neuesten Ortungsdaten aktualisiert. Dabei stellt mindestens einer der vordefinierten Zustände einen Ein- oder Ausschervorgang dar.

Der Erfindung liegt das Problem zugrunde, ein Verfahren anzugeben, das eine verbesserte Erfassung ein- oder ausscherender Fahrzeuge ermöglicht.

Zur Lösung dieses Problems ist erfindungsgemäß vorgesehen, dass in einem aufgenommenen Bild wenigstens eine die eigene befahrene Fahrspur begrenzende Fahrbahnmarkierung sowie wenigstens ein Winkel oder ein Maß für einen Winkel zwischen zwei virtuellen Linien im Bild, die gemeinsam von einem definierten Startpunkt, der insbesondere der Position der Kamera entspricht, ausgehen, ermittelt wird, wobei die eine Linie zu einem detektierten Bildpunkt oder Bildabschnitt am Fahrzeug und die andere Linie zu der Fahrspurmarkierung läuft und die Linien den Bildpunkt oder Bildabschnitt und die Fahrspurmarkierung auf gleicher horizontaler Bildebene schneiden welche Winkel oder welches Maß als Maß für die Ermittlung eines Ein- oder Ausschervorgangs dient, wobei eine reine Winkelbetrachtung vorgenommen wird.

Das erfindungsgemäße Verfahren nutzt zur Ermittlung einer lateralen Bewegung eines vorausfahrenden Fahrzeugs, die einen Ein- oder Ausschervorgang beschreiben kann, die von der fahrzeugseitigen Kamera kontinuierlich mit relativ hoher Bildaufnahmerate (üblicherweise ca. 25 Hz) aufgenommenen zweidimensionalen Bilder, die das Fahrzeugvorfeld abbilden. Diese werden von einer Steuerungseinrichtung des Fahrerassistenzsystems, die entsprechende Auswertealgorithmen umfasst, zunächst dahingehend ausgewertet, dass wenigstens eine, vorzugsweise die beiden die eigene Fahrspur begrenzenden Fahrbahnmarkierungen, seien es gestrichelte oder durchgezogene Linien, ermittelt werden, was mit geeigneten Bildanalysealgorithmen ohne weiteres möglich ist. Weiterhin wird seitens der Steuerungseinrichtung ein Bildpunkt oder ein Bildabschnitt, der von einem vorausfahrenden, im Bild gezeigten Fahrzeug definiert wird bzw. einem solchen zuzuordnen ist, mit geeigneten Analysealgorithmen detektiert. Gestützt auf diese durch die Bildauswertung erhaltenen Informationen wird nun ein Winkel oder ein Maß für einen solchen Winkel ermittelt, welcher Winkel zwischen zwei virtuellen Linien gegeben ist, die von einem gemeinsamen definierten Startpunkt ausgehen. Dieser Startpunkt wird bevorzugt über die Position der Kamera definiert, letztlich also der Mitte des aufgenommenen zweidimensionalen Bildes, das quasi vertikal stehend das Fahrzeugvorfeld abbildet. Die eine virtuelle Linie läuft von diesem definierten Startpunkt zu dem detektierten Bildpunkt oder Bildabschnitt am Fahrzeug. Die andere Linie läuft zu der detektierten Fahrspurmarkierung. Beide Linien schneiden den Bildpunkt bzw. Bildabschnitt und die Fahrspurmarkierung auf gleicher horizontaler Bildebene, das heißt, die Schnittpunkte liegen in der gleichen Horizontalebene. Hierüber wird also ein Winkel definiert, der als Maß für den horizontalen Abstand des vorausfahrenden Fahrzeugs zur erfassten Fahrbahnmarkierung dienen kann. Dabei kann entweder tatsächlich der Winkel selbst, also die entsprechende Gradzahl, ermittelt werden, oder ein entsprechendes Maß für einen Winkel, das diesen abstrakt beschreibt. Dieser Winkel wird nun zu jedem aufgenommenen Bild (bei hoher Bildaufnahmerate gegebenenfalls auch zu jedem zweiten oder jedem dritten Bild) ermittelt. Durch Vergleich und Ermittlung einer etwaigen Änderung des ermittelten Winkels oder ermittelten Maßes zwischen zwei oder mehreren nacheinander aufgenommenen Bildern kann nun ohne weiteres erfasst werden, ob und mit welcher Geschwindigkeit sich ein vorausfahrendes Fahrzeug tatsächlich der eigenen Fahrbahnbegrenzung nähert, wobei mit besonderem Vorteil beim erfindungsgemäßen Verfahren die tatsächliche eigene Fahrspur, begrenzt über die ermittelten Fahrbahnmarkierungen, zur Bestimmung eines Ein- oder Ausschervorgangs herangezogen wird und nicht ein virtueller Fahrschlauch, der die tatsächliche Fahrspur mitunter nicht hinreichend genau abbildet. Das erfindungsgemäße Verfahren zeichnet sich insbesondere dadurch aus, dass eine reine Winkelbetrachtung vorgenommen wird, ohne dass hierbei der reale Abstand des vorausfahrenden Fahrzeugs zum eigenen Fahrzeug eine Rolle spielt. Denn allein aufgrund dieser Winkelbetrachtung, sei sie direkt durch Ermittlung des tatsächlichen Ist-Winkels, sei sie indirekt durch Ermittlung eines Winkelmaßes, bzw. der Auswertung des zeitlichen Änderungsverlaufs kann genauestens auf die Bewegung des Fahrzeugs wie auch seine Bewegungsrichtung geschlossen werden. Dieser Winkel zwischen Bildpunkt/Bildabschnitt und Fahrspurmarkierung, der im Folgenden auch als "Markierungswinkel" bezeichnet wird, wird unmittelbar aus dem aufgenommenen Bild ermittelt, also anhand der realen abgebildeten Verhältnisse bzw. Gegebenheiten, so dass hierüber das reale Fahrverhalten des vorausfahrenden Fahrzeugs wesentlich genauer erfasst werden kann.

Gerade im Nahbereich bis ca. 60 m, gegebenenfalls auch weiter, ist es legitim, als Begrenzungen der eigenen Fahrspur direkt die detektierten Spurmarkierungen zu verwenden, was zu einer genaueren Erfassung möglicher Ein- oder Ausschervorgänge führt. Nachdem der virtuelle Fahrschlauch aus gegebenen Fahrzeugdaten abgeleitet wird, beispielsweise unter Berücksichtigung des Lenkwinkels etc., kann zwangsläufig der Fall auftreten, dass beispielsweise ein gerader Fahrschlauch ermittelt wird, während tatsächlich die Fahrspur eine leichte Kurve beschreibt bzw. eine solche unmittelbar folgt. Vorausfahrende Fahrzeuge, die sich bereits in diesem Bereich befinden, und sich der Fahrspurmarkierung, also der eigenen Fahrspur nähern bzw. in diese einfahren, werden mitunter nicht oder viel zu spät erfasst, da das System letztlich von der eigenen geraden Fahrspur ausgeht. Dies wird beim erfindungsgemäßen Verfahren mit besonderem Vorteil vermieden, da zur Ermittlung etwaiger Ein- oder Ausschervorgänge wie beschrieben auf reale Fahrspurmarkierungen zurückgegriffen wird, mithin also die Ist-Fahrspur zugrunde gelegt wird, und nicht ein aus Ego-Fahrzeugdaten abgeleiteter virtueller Fahrschlauch.

Wenngleich es im Rahmen des erfindungsgemäßen Verfahrens bereits ausreichend ist, nur den tatsächlichen Winkel oder das ihn beschreibende Winkelmaß des Markierungswinkels, also des sich ergebenden Winkels zwischen den virtuellen Linien zum Bildpunkt/Bildabschnitt und zur Fahrspurmarkierung, zu ermitteln und der Analyse und weiteren Steuerung des Fahrerassistenzsystems zugrunde zu legen, sieht eine zweckmäßige Weiterbildung der Erfindung vor, das ein zweiter Winkel oder ein zweites Maß für einen zweiten Winkel zwischen zwei virtuellen Linien im Bild, die wiederum gemeinsam von dem definierten Startpunkt ausgehend, ermittelt wird, wobei die eine Linie zu einem detektierten Bildpunkt oder Bildabschnitt an der einen Seite des erfassten Fahrzeugs und die andere Linie zu einem detektierten Bildpunkt oder Bildabschnitt an der anderen Seite des Fahrzeugs läuft, wobei der Quotient aus dem ersten Winkel oder dem ersten Maß und dem zweiten Winkel oder dem zweiten Maß als Maß für die Ermittlung eines Ein- oder Ausschervorgangs dient.

Diese Ermittlung des zweiten Winkels oder des zweiten Maßes und die Quotientenbildung ermöglicht eine Normierung des Ermittlungsergebnisses auf die Objektbreite, nachdem über diesen zweiten Winkel oder dieses zweite Maß eine Information über die Breite des vorausfahrenden Fahrzeugs ermittelt werden kann. Über diese Normierung kann das Überdeckungsmaß als dimensionsloser Rechenwert ermittelt werden, welches Überdeckungsmaß ausdrückt, welche Überdeckung das vorausfahrende Fahrzeug zur Spurmarkierung hat, ob dieses also beispielsweise komplett auf der Nachbarspur fährt, über der Spurmarkierung fährt oder komplett in der gleichen Spur wie das eigene Fahrzeug fährt. Durch die Normierung auf die Objektbreite wird erreicht, dass ein schmales Objekt wie beispielsweise ein Motorrad wesentlich schneller ein höheres Überdeckungsmaß erreicht als ein breites Objekt wie beispielsweise ein LKW. Dies berücksichtigt, dass schmalere und zumeist auch wendigere Objekte wie Zweiräder meist schnellere laterale Fahrmanöver ausführen können als breite Objekte wie LKWs. Dieses Überdeckungsmaß kann dann als Eingangsgröße für die Berechnung einer etwaigen Übernahme des einscherenden Fahrzeugs als Führungsfahrzeug sowie des Bremszeitpunktes auf das einscherende Fahrzeug verwendet werden. Dieser zweite Winkel oder das zweite Maß wird wiederum unmittelbar aus dem aufgenommenen Bild ermittelt, wobei auch hierfür wiederum virtuelle Linien dienen, die diesen Winkel beschreiben. Die beiden Linien laufen ausgehend vom gemeinsamen Startpunkt zu zwei Bildpunkten oder Bildabschnitten, die sich an den jeweiligen Seiten des erfassten Fahrzeugs befinden. Hierüber wird wiederum ein Winkel aufgespannt, dessen Größe von der Objektbreite abhängt, weshalb im Folgenden dieser Winkel auch als "Objektwinkel" bezeichnet wird.

Für eine einfache Ermittlung dieses zweiten Winkels oder zweiten Maßes bietet sich eine Subtraktion des Winkels zwischen den virtuellen Linien vom gemeinsamen Startpunkt zum rechten Bildpunkt oder Bildabschnitt und zur Fahrbahnmarkierung und dem Winkel zwischen den virtuellen Linien vom gemeinsamen Startpunkt zum linken Bildpunkt oder Bildabschnitt und zur Fahrbahnmarkierung an. Das heißt, dass letztlich zwei Winkel ermittelt werden, nämlich der Winkel "Fahrbahnmarkierung-rechter Bildpunkt/Bildabschnitt" und der Winkel "Fahrbahnmarkierung-linker Bildpunkt/Bildabschnitt", die nachfolgend voneinander subtrahiert werden (Entsprechendes gilt natürlich, wenn ein Winkelmaß ermittelt wird). Gleichwohl besteht natürlich die Möglichkeit, den Winkel unmittelbar bezogen auf das Objekt zu bestimmen.

Ein im Bild gezeigtes vorausfahrendes Fahrzeug kann beispielsweise unmittelbar in seiner rückseitigen Ansicht ermittelt und ein bestimmter Bildpunkt oder Bildabschnitt ausgewählt werden. Denkbar ist es aber auch, dass als ausgewählter Bildpunkt oder Bildabschnitt das linke oder rechte untere Eck einer das Fahrzeug umgebenden dargestellten oder virtuellen Bildmarkierung ermittelt wird. Der Analysealgorithmus, beispielsweise ein Kantendetektionsalgorithmus, kann also das vorausfahrende Fahrzeug ermitteln und dieses zur weiteren Datenverarbeitung mit einem viereckigen Rahmen markieren, der im Wesentlichen entlang der Fahrzeuggrenzen verläuft. Nachdem das linke oder das rechte untere Eck fahrbahnnah ist, gibt dieser Punkt oder dieser Abschnitt die tatsächliche Lage des Fahrzeugs relativ zur Fahrbahn an, weshalb es zweckmäßig ist, diesen nachfolgend weiter zu betrachten.

Eine besonders einfache Möglichkeit zur Ermittlung eines Winkels oder eines Winkelmaßes besteht darin, hierfür die Anzahl an Pixeln einer horizontalen Pixellinie des Bildes zwischen einem detektierten Bildpunkt oder Bildabschnitt zur detektierten Fahrbahnmarkierung oder zwischen zwei Bildpunkten oder Bildabschnitten zu ermitteln. Das heißt, dass die Steuerungseinrichtung die Pixelzahl längs der horizontalen Pixellinie zwischen den entsprechenden Schnittpunkten der virtuellen Linien mit dem Bildpunkt bzw. dem Bildabschnitt und der Fahrbahnmarkierung bestimmt. Da der Bildwinkel der Kamera, also der Öffnungswinkel, mit dem die Kamera das Fahrzeugvorfeldbild aufnimmt, bekannt ist und nachdem die sich ebenfalls nicht ändernde Pixelzahl in horizontaler Richtung bekannt ist, ist weiterhin bekannt, welchen Winkel ein einzelnes Pixel immer beschreibt. Sind horizontal in einer Pixellinie beispielsweise 1.000 Pixel vorgesehen und beträgt der Bildwinkel in horizontaler Richtung z. B. 120°, so bildet ein einzelnes Pixel einen Pixelwinkel von 120° : 1.000 = 0,12° ab. Ist nun die Summe der Pixel zwischen den relevanten Linienschnittpunkten bekannt, so kann durch einfache Multiplikation der Pixelanzahl mit dem Pixelwinkel der Gesamtwinkel ermittelt werden. Dieser Pixelwinkel ist für alle Pixel aller Pixellinien gleich, er ändert sich also über die Bildebene gesehen nicht. Das heißt, dass anhand der Pixelanzahl ohne weiteres der entsprechende Winkel konkret ermittelt werden kann, wie auch selbstverständlich die Pixelanzahl selbst als Winkelmaß angesetzt und der nachfolgenden Verarbeitung zugrunde gelegt werden kann. Über die zeitliche Veränderung des ermittelten Winkels wie auch des Maßes bzw. der Pixelanzahl zwischen nachfolgend aufgenommenen Bildern kann so ohne weiteres der Ein- oder Ausschervorgang erfasst werden.

Neben dem Verfahren betrifft die Erfindung ferner ein Kraftfahrzeug geeignet zur Durchführung des Verfahrens, umfassend ein der Längsführung dienendes Fahrerassistenzsystem mit einer Steuerungseinrichtung und eine das Fahrzeugvorfeld in Form von zweidimensionalen Bildern aufnehmende Kamera. Das Fahrzeug zeichnet sich dadurch aus, dass die mit der Kamera kommunizierende Steuerungseinrichtung zur Detektion wenigstens einer die eigene Fahrspur begrenzenden Fahrbahnmarkierung und wenigstens eines von einem vorausfahrenden Fahrzeug definierten Bildpunkts oder Bildabschnitts in einem aufgenommenen Bild sowie zur Ermittlung wenigstens eines Winkels oder eines Maßes für einen Winkel zwischen zwei virtuellen Linien im Bild, die gemeinsam von einem definierten Startpunkt, der insbesondere der Position der Kamera entspricht, ausgehen, wobei die eine Linie zu einem detektierten Bildpunkt oder Bildabschnitt am Fahrzeug und die andere zu der Fahrspurmarkierung läuft und beide Linien den Bildpunkt oder Bildabschnitt und die Fahrspurmarkierung auf gleicher horizontaler Bildebene schneiden, welcher Winkel oder welches Maß als Maß für die Ermittlung eines Ein- oder Ausschervorgangs dient, sowie zur Steuerung des Längsführungssystems unter Berücksichtigung des Ermittlungsergebnisses ausgebildet ist. Die systemseitige Steuerungseinrichtung verfügt demzufolge über geeignete Auswerte- und Analysealgorithmen, um je nach Verfahrensausgestaltung die entsprechenden Parameter aus dem Bild zu erfassen und zu verarbeiten. Anhand des zeitlichen Verlaufs respektive der Änderung der ermittelten Winkel, Maße oder im Falle der Normierung der ermittelten Rechenwerte kann die Steuerungseinrichtung einen Ein- oder Ausschervorgang ermitteln, wobei die Ermittlungsergebnisse der nachfolgenden Steuerung des Längsführungssystems, sei es zur Übernahme eines einscherenden Fahrzeugs als der Steuerung zugrunde zu legendes Führungsfahrzeug, sei es, dass ein ausscherendes Fahrzeug als Führungsfahrzeug "losgelassen" wird, sei es, dass Bremseingriffe und dergleichen erforderlich sind, zugrunde liegen.

Weitere zweckmäßige Erfindungsausgestaltungen des Kraftfahrzeugs sind den Unteransprüchen zu entnehmen.

Weitere Vorteile, Merkmale und Einzelheiten der Erfindung ergeben sich aus den im Folgenden beschriebenen Ausführungsbeispielen sowie anhand der Zeichnungen. Dabei zeigen:

Fig. 1  eine Prinzipdarstellung eines erfindungsgemäßen Kraftfahrzeugs,

Fig. 2  eine Aufsicht auf eine Verkehrssituation zur Erläuterung der jeweils zu ermittelnden Winkel,

Fig. 3  eine Prinzipdarstellung eines zweidimensionalen Kamerabilds bezogen auf die Verkehrssituation gemäß Fig. 2, und

Fig. 4  eine Prinzipdarstellung zur Erläuterung der sich ergebenden Winkel respektive normierten Rechenwerte für verschiedene Positionen des vorausfahrenden Fahrzeugs.

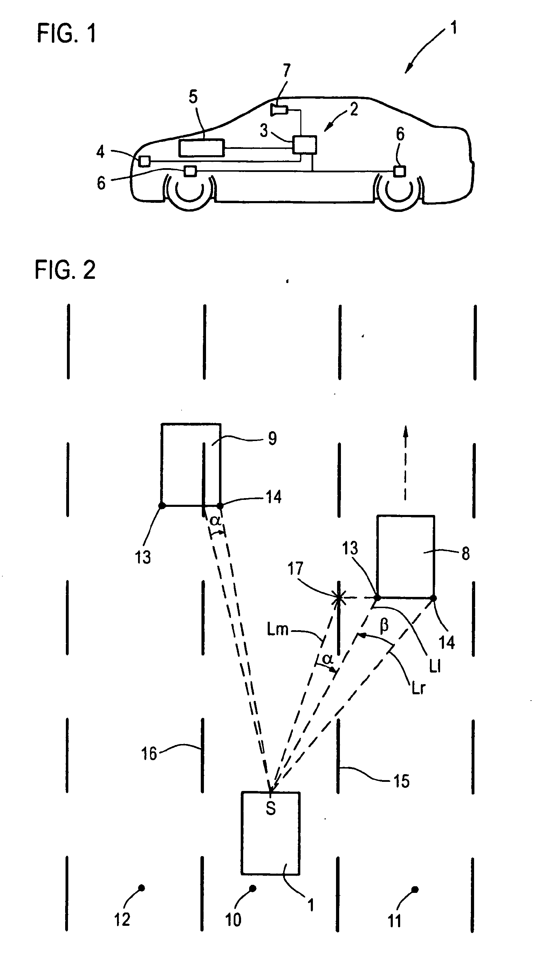

Fig. 1 zeigt ein erfindungsgemäßes Kraftfahrzeug 1, umfassend ein Längsführungssystem 2, beispielsweise ein ACC-System. Dieses umfasst eine Steuerungseinrichtung 3 sowie einen oder mehrere an der Fahrzeugfront angeordnete Abstandsmesssssensoren, beispielsweise Radarsensoren. Über die Steuerungseinrichtung 3 kann je nach Verkehrssituation das Fahrzeug automatisch längsgeführt werden, wozu diese mit dem Antriebsaggregat 5 sowie dem Bremssystem 6 kommuniziert bzw. diese entsprechenden Systeme ansteuern kann. Vorgesehen ist ferner eine Kamera 7, die in Form zweidimensionaler Bilder das Fahrzeugvorfeld erfasst. Der Aufbau sowie die Funktion eines solchen Längsführungssystems ist hinlänglich bekannt, auch der Einsatz von Kameras zur Fahrzeugvorfeldbeobachtung.

Fig. 2 zeigt in Form einer Prinzipdarstellung eine Verkehrssituation, wobei das eigene Kraftfahrzeug 1 sowie ein auf einer rechten Fahrspur vorausfahrendes Kraftfahrzeug 8 und ein weiteres, primär auf der linken Fahrspur vorausfahrendes zweites Fahrzeug 9 gezeigt sind. Das eigene Fahrzeug 1 fährt auf der mittleren Fahrspur 10, das Fahrzeug 8 auf der rechten Fahrspur 11 und das weitere Fahrzeug 9 auf der linken Fahrspur 12 einer Autobahn. Zum Fahrzeug 8 ist über den gestrichelten Pfeil die Fahrtrichtung aller Fahrzeuge angezeigt.

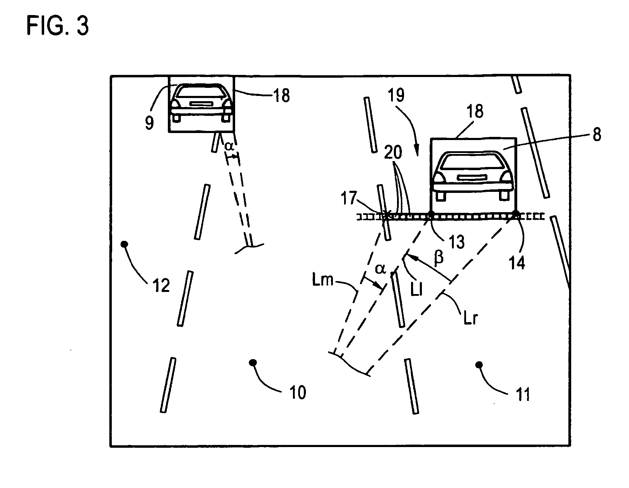

Wie einleitend beschrieben, wird zur Ermittlung eines Ein- oder Ausschervorgangs entweder nur der Markierungswinkel oder im Falle einer normierten Betrachtung auch der Objektwinkel bestimmt. Diese Winkel sind in Bezug auf das Fahrzeug 8 dargestellt. Der erste Winkel, also der Markierungswinkel, ist mit $\alpha$ bezeichnet, der die Breite des Fahrzeugs 8 beschreibende zweite Winkel, der Objektwinkel, ist mit $\beta$ bezeichnet. Ausgehend von einem definierten Startpunkt S bezogen auf das eigene Kraftfahrzeug, der der Position der Kamera 7 entspricht, werden die Winkel von verschiedenen virtuellen Linien aufgespannt. Diese Linien sind in Fig. 2, die eine Aufsicht zeigt, eingezeichnet, in Fig. 3, die ein zweidimensionales, quasi auf der Fahrbahn vertikal "stehendes" Kamerabild zeigt, sind diese Linien nur angedeutet, da sie letztlich quasi vertikal in die Kamerabildebene laufen, da die Kamera das Kamerabild als zweidimensionales Bild erzeugt.

Im Kamerabild wird zunächst das Kraftfahrzeug 8 detektiert. Am Kraftfahrzeug 8 werden zwei ausgezeichnete Bildpunkte oder Bildabschnitte definiert, die, worauf nachfolgend in Bezug auf Fig. 3 noch eingegangen wird, den im Bild gezeigten unteren rechten und linken Ecken des Kraftfahrzeugs 8 bzw. einer Markierung entsprechen, sie sind in der Aufsicht in Fig. 2 zu Erläuterungszwecken als Bildpunkte 13 und 14 eingezeichnet. Ausgehend vom Startpunkt S laufen zu beiden Bildpunkten 13, 14 zwei gestrichelt gezeigte virtuelle Linien, nämlich die Linie Ll, die zum linken Bildpunkt 13 läuft, sowie die Linie Lr, die zum rechten Bildpunkt 14 läuft.

Eine weitere Linie Lm läuft zu der ebenfalls über die Steuerungseinrichtung im aufgenommenen Kamerabild detektierten Fahrbahnmarkierung 15, die die eigene Fahrspur 10 an der rechten Seite begrenzt, linksseitig ist die eigene Fahrspur 10 über die ebenfalls detektierte linke Fahrbahnmarkierung 16 begrenzt. Die virtuelle Linie Lm schneidet die Fahrbahnmarkierung 15 in der Horizontalebene, in der auch die beiden Bildpunkte 13 und 14 liegen. Der mit dem Kreuz symbolisierte Schnittpunkt 17 liegt auf der Fahrbahnmarkierung 15. Das heißt, dass insgesamt bei maximaler Ausbaustufe des erfindungsgemäßen Verfahrens respektive Kraftfahrzeugs drei virtuelle Linien gegeben sind, nämlich die zur Fahrbahnmarkierung laufende virtuelle Linie Lm sowie die zum linken Bildpunkt 13 laufende virtuelle Linie Ll und die zum rechten Bildpunkt laufende virtuelle Linie Lr.

Die beiden Linien Lm und Ll definieren den ersten Winkel oder Markierungswinkel $\alpha$. Dieser ändert sich ersichtlich, je nachdem, wie nahe das Fahrzeug 8 an der Fahrbahnmarkierung 15 ist, das heißt, dass sich der horizontale Abstand zwischen dem Bildpunkt 13 und dem Schnittpunkt 17 ändert, worüber auch zwangsläufig der Winkel $\alpha$ kleiner oder größer wird. Allein aus dem zeitlichen Verlauf der Änderung des Winkels $\alpha$, der vorzugsweise zu jedem aufgenommenen Kamerabild ermittelt wird, kann durch diese bloße Winkelbetrachtung bestimmt werden, ob das Fahrzeug 8 sich der Fahrspurmarkierung 15 nähert, mithin also ein Einschervorgang bevorsteht oder nicht.

Die beiden Linien Ll und Lr definieren den Objektwinkel $\beta$, sie geben also die Objektbreite an. Er kann entweder unmittelbar durch Ermittlung des Winkels zwischen beiden Linien Ll und Lr ermittelt werden, gleichermaßen besteht auch die Möglichkeit, zunächst jeweils den Winkel zu ermitteln, den die Linie Lr mit der Linie Lm und den die Linie Ll mit der Linie Lm einschließt, und anschließend beide Winkel voneinander zu subtrahieren.

Gezeigt ist ferner der Objektwinkel $\alpha$ auch zum Fahrzeug 9, das über der Markierung 16 fährt. Das heißt, dieses nimmt gerade einen Ein- oder Ausschervorgang vor. Nachdem als Bezugsfahrbahnmarkierung die Markierung 16 verwendet wird, wird der Winkel $\alpha$ zwischen dem rechten Bildpunkt 14 und dem sich ergebenden Schnittpunkt zur Fahrbahnmarkierung 16 ermittelt, während, wenn der Winkel zur Fahrbahnmarkierung 15 zu ermitteln ist, stets der linke Bildpunkt 13 berücksichtigt wird. Der Winkel wird betragsmäßig stets von der die Fahrbahnmarkierung schneidenden Linie zur Bildpunktlinie bestimmt, hiernach richtet sich sein Vorzeichen. Es sei nachfolgend angenommen, dass der Markierungswinkel positiv ist, wenn er entgegen dem Uhrzeigersinn läuft, er ist negativ, wenn er im Uhrzeigersinn umläuft.

Fig. 3 zeigt eine Prinzipdarstellung eines Kamerabilds, das näherungsweise die Situation aus Fig. 2 darstellt. Im zweidimensionalen Kamerabild sind zum einen die drei Fahrspuren 10, 11, 12 gezeigt, wie auch die beiden Fahrzeuge 8 und 9, das eigene Kraftfahrzeug 1 ist hier natürlich nicht zu sehen. Die optische Achse, längs welcher die Kamera das Kamerabild aufnimmt, läuft vertikal zur Bildebene. Die Steuerungseinrichtung 3 ermittelt innerhalb des Kamerabildes zunächst die jeweiligen Kraftfahrzeuge 8, 9, was durch geeignete Analysealgorithmen möglich ist. Sodann wird zur Vereinfachung der folgenden Bildauswertung jedem Fahrzeug 8, 9 eine vorzugsweise virtuelle Bildmarkierung 18 in Form eines hier in Fig. 3 gezeigten, real jedoch nicht unbedingt einzublendenden viereckigen Rahmens erzeugt und um das jeweilige Fahrzeug gelegt. Diese Bildmarkierung dient zur Definition oder Bildung der jeweiligen Bildpunkte 13, 14. Diese sind in Fig. 3 gezeigt, wie auch die beiden hier nur angedeuteten virtuellen Linien Ll und Lr, die tatsächlich in die Bildebene hineinlaufen. Gezeigt ist auch die virtuelle Linie Lm, die zum Schnittpunkt 17 führt, der in der gleichen Horizontalebene liegt, in der auch die Bildpunkte 13 und 14 liegen. Dargestellt sind ferner die beiden Winkel α und β.

Die konkrete Ermittlung der jeweiligen Winkel α, β respektive die Ermittlung eines entsprechenden Winkelmaßes, das die Winkel als Maßzahl in ihrer Größe beschreibt, erfolgt bevorzugt anhand der Pixelanzahl längs einer horizontalen Pixellinie 19 vorhandener Pixel 20. Die Pixellinie 19 verläuft in der Horizontalebene, in der auch die Bildpunkte 13, 14 und der Schnittpunkt 17 liegen. Nachdem der Bildwinkel der Kamera 7 bekannt ist, der bei jedem Bild gleich ist, beschreibt jedes einzelne Pixel bzw. bildet jedes einzelne Pixel 20 einen inkrementellen Bildwinkel ab. Das heißt, dass der einzelne Pixelwinkel sich aus dem Quotienten des horizontalen Bildwinkels, beispielsweise 120°, und der Pixelanzahl längs einer horizontalen Pixellinie 19, beispielsweise 1.000 Pixel, ergibt. Dieser Pixelwinkel ist für alle Pixel 20 in der gesamten Aufnahmeebene gleich.

Anhand der Anzahl der einzelnen Pixel 20 längs der Pixellinie 19, die zwischen dem Bildpunkt 13 und dem Schnittpunkt 17 gegeben sind, bzw. die zwischen den Bildpunkten 13 und 14 gegeben sind, kann nun der jeweilige Winkel α bzw. β bestimmt werden. Das Vorzeichen des Markierungswinkels α ergibt sich aus dem Verlauf bzw. der Lage der relevanten virtuellen Linien Lm und Ll. Auf diese Weise können sehr einfach die jeweiligen Winkel unmittelbar aus dem Bild ermittelt werden.

Wie beschrieben besteht die Möglichkeit, bereits allein anhand einer Auswertung des zeitlichen Änderungsverlaufs des Markierungswinkels α einen Ein- oder Ausschervorgang zu ermitteln. Zweckmäßig ist jedoch die Normierung des Winkels zur Ermittlung einer "Überdeckung", die quasi das Maß angibt, wie weit das Fahrzeug über einer Spurmarkierung fährt respektive wie das Verhältnis der miteinander verrechneten Winkel ist. Zur Bildung eines normierten Maßes für die Überdeckung LE der Objektbreite zur Spurmarkierung wird das Verhältnis aus Markierungswinkel und Objektwinkel ermittelt. Es gilt:

$$LE = \alpha : \beta.$$

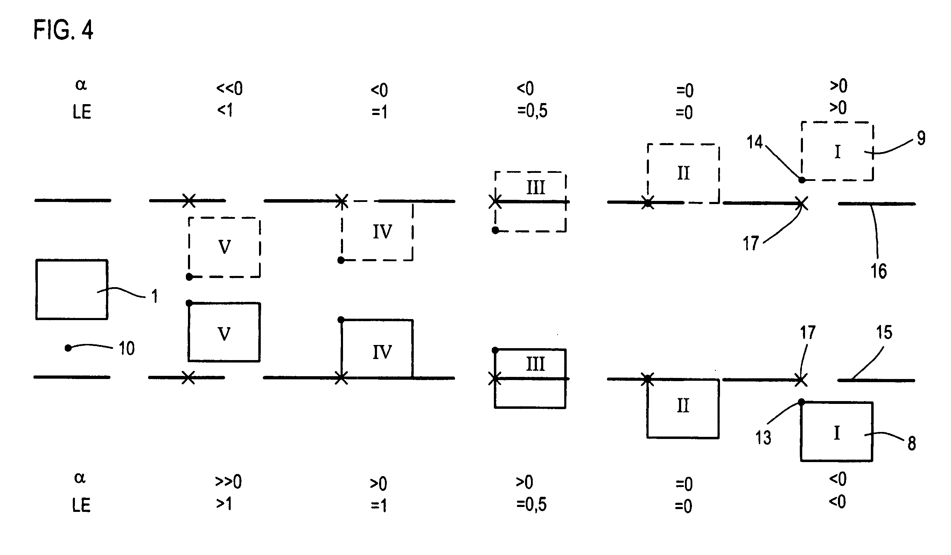

Wie sich aus Fig. 4 ergibt, kann die Überdeckung LE folgende Werte annehmen, erläutert am Beispiel eines Einschervorgangs von einer rechten Fahrspur kommend auf die eigene Fahrspur:

LE > 0: Fahrzeug fährt komplett auf der Nachbarspur
LE = 0: Fahrzeug fährt mit linkem Bildpunkt 13 exakt auf der Spurmarkierung 15
LE = 0,5: Fahrzeug fährt mittig über der Fahrbahnmarkierung 15
LE = 1: Fahrzeug fährt in gleicher Spur mit dem rechten Bildpunkt 14 exakt auf Fahrbahnmarkierung 15
LE < 0: Fahrzeug fährt komplett in gleicher Fahrspur 10.

In gleicher Weise kann die Berechnung einer Ausscherwahrscheinlichkeit erfolgen. Über diese Normierung auf den Objektwinkel, mithin also auf die Objektbreite, ist es möglich, das Verhalten eines schmaleren Objektes wie eines Motorrades wesentlich besser und schneller erfassen zu können, da, nachdem der Objektwinkel wesentlich kleiner ist, wesentlich schneller ein hohes oder niedriges Überdeckungsmaß erreicht wird. Das Überdeckungsmaß LE kann als Eingangsgröße für die Berechnung des Bremszeitpunkts auf ein einscherendes Fahrzeug verwendet werden. Je größer der LE-Wert ist, desto größer ist die Notwendigkeit eines Bremseingriffs, je kleiner der LE-Wert ist, desto schneller kann ein vorausfahrendes Fahrzeug wieder "losgelassen" und beschleunigt werden.

Aus dem Überdeckungsmaß LE kann ferner durch zeitliche Ableitung zusätzlich noch ein Maß für die Einschergeschwindigkeit berechnet werden, um als weitere Eingangsgröße in die Berechnung der Einscherwahrscheinlichkeit eingehen.

Fig. 4 zeigt die erfindungsgemäß relevanten Parameter α und LE für verschiedene Positionen des vorausfahrenden Fahrzeugs. Gezeigt ist (unter Bezugnahme auf die Figuren 2 und 3) jeweils das eigene Kraftfahrzeug 1 sowie das vorausfahrende Fahrzeug 8 und das Fahrzeug 9 auf der gegenüberliegenden Seite. Zu jedem Fahrzeug ist jeweils der linke Bildpunkt 13 im Fall des Fahrzeugs 8 und der rechte Bildpunkt 14 im Fall des Fahrzeugs 9 sowie der jeweilige Schnittpunkt 17 mit der rechten Fahrspurmarkierung 15 bzw. der linken Fahrspurmarkierung 16 gezeigt.

Nachfolgend wird zunächst das Fahrzeug 8 betrachtet. Ausgehend von der Position in Fig. 4 rechts befindet sich das Fahrzeug 8 zur rechten Seite der Fahrspurmarkierung 15 hin beabstandet, das heißt, der hier betrachtete linke Bildpunkt 13 liegt, gesehen vom Kraftfahrzeug 1 aus, zur rechten Seite im Abstand zum Schnittpunkt 17. Dies bedeutet, dass, nachdem der Markierungswinkel $\alpha$ definitionsgemäß bei Drehung im Uhrzeigersinn negativ ist, der Markierungswinkel $\alpha$ hier < 0 ist. Der Objektwinkel ist zwangsläufig ebenfalls < 0. In der zweiten, mit II gekennzeichneten Position befindet sich das Fahrzeug 8 mit seiner linken Seite genau über der Fahrbahnmarkierung 15, das heißt, dass der Bildpunkt 13 mit dem Schnittpunkt 17 zusammenfällt. Hieraus resultiert, dass $\alpha$ = 0 und auch die Überdeckung LE = 0 ist.

In der Position III, bei der das Fahrzeug 8 mittig oberhalb der Fahrbahnmarkierung 15 fährt, ergibt sich, nachdem nunmehr die Linie LI, gesehen vom Kraftfahrzeug 1 aus, links benachbart zur Linie Lm verläuft, dass $\alpha$ > 0 ist. Infolge dieser mittigen Überfahrt über die Fahrbahnmarkierung 15 ergibt sich zwangsläufig, dass LE = 0,5 beträgt, da hier der Objektwinkel $\beta$ doppelt so groß ist wie der Markierungswinkel $\alpha$.

In der Position IV ist letztlich der hier nicht gezeigte rechte Bildpunkt 14 oberhalb des Schnittpunkts 17. $\alpha$ ist per definitionem wiederum > 0, der LE-Wert ist = 1, da hier $\alpha$ und $\beta$, also der Markierungs- und der Objektwinkel, gleich sind.

Schließlich ist in der Position V das Fahrzeug 8 vollständig auf der Fahrbahn 10, so dass $\alpha$ deutlich > 0 und auch der LE-Wert > 1 ist.

Zum Fahrzeug 9 ergeben sich letztlich genau umgekehrte Verhältnisse. Betrachtet wird hier stets der rechte Bildpunkt 14 und sein Verhältnis zum Schnittpunkt 17. In der Position I befindet sich der Bildpunkt 14 zur linken Seite horizontal versetzt zum Schnittpunkt 17. Hieraus resultiert, nachdem der Markierungswinkel $\alpha$ gegen den Uhrzeigersinn läuft, dass $\alpha$ > 0 ist. Entsprechend ist auch der LE-Wert > 0.

In der Position II fallen der Bildpunkt 14 und der Schnittpunkt 17 zusammen, so dass sich zwangsläufig $\alpha$ = 0 und LE = 0 ergibt.

In der Position III, in der das Fahrzeug nun wiederum mittig oberhalb der Fahrbahnmarkierung 16 fährt, ergibt sich ein $\alpha$-Wert < 0, während der LE-Wert = 0,5 ist, da wiederum der Winkel $\beta$ doppelt so groß ist wie der Winkel $\alpha$.

In der Position IV, bei der der hier nicht gezeigte linke Bildpunkt 13 mit dem Schnittpunkt 17 zusammenfällt, ergibt sich wiederum ein $\alpha$ < 0, da auch hier der rechte Bildpunkt 17 und mithin die Linie Lr rechts von der Linie Lm verläuft. Infolge der kantengenauen Überfahrt über die Markierung 16 ergibt sich ein LE-Wert = 1.

In der Position V fährt das Fahrzeug wiederum vollständig auf der Fahrspur 10, so dass sich ein Winkel $\alpha$ deutlich < 0 und ein LE-Wert ebenfalls < 1 ergibt.

Ersichtlich kann also eine genaue Ermittlung des Verhaltens eines vorausfahrenden Fahrzeugs respektive seine Bewegung und die Auswertung dahingehend, ob ein Einscher- oder ein Ausschervorgang vorliegt, allein durch Betrachtung der genannten Winkel erfasst werden, der Abstand des vorausfahrenden Fahrzeugs zum eigenen Fahrzeug spielt keine Rolle und wird nicht berücksichtigt. Es ist dabei bereits ausreichend, nur den Markierungswinkel $\alpha$ zu berücksichtigen, gleichermaßen kann eine Normierung insbesondere bezogen auf die Erfassung auch schmaler Objekte vorteilhaft sein.

**Patentansprüche**

1. Verfahren zur Ermittlung eines Ein- oder Ausschervorgangs eines dem eigenen Kraftfahrzeug vorausfahrenden Fahrzeugs, wobei das eigene Kraftfahrzeug ein der Längsführung dienendes Fahrerassistenzsystem und eine das Fahrzeugvorfeld in Form zweidimensionaler Bilder aufnehmenden Kamera umfasst,
   **dadurch gekennzeichnet,**
   **dass** in einem aufgenommenen Bild wenigstens eine die eigene befahrene Fahrspur begrenzende Fahrbahnmarkierung sowie wenigstens ein Winkel oder ein Maß für einen Winkel zwischen zwei virtuellen Linien im Bild, die gemeinsam von einem definierten Startpunkt, der insbesondere der Position der Kamera entspricht, ausgehen, ermittelt wird, wobei die eine Linie zu einem detektierten Bildpunkt oder Bildabschnitt am Fahrzeug und die andere zu der Fahrspurmarkierung läuft und die Linien den Bildpunkt oder Bildabschnitt und die Fahrspurmarkierung auf gleicher horizontaler Bildebene schneiden, welcher Winkel oder welches Maß als Maß für die Ermittlung eines Ein- oder Ausschervorgangs dient, wobei eine reine Winkelbetrachtung vorgenommen wird.

2. Verfahren nach Anspruch 1,
   **dadurch gekennzeichnet,**
   **dass** ein zweiter Winkel oder ein zweites Maß für einen zweiten Winkel zwischen zwei virtuellen Linien im Bild, die gemeinsam von dem definierten Startpunkt ausgehen, ermittelt wird, wobei die eine Linie zu einem detektierten Bildpunkt oder Bildabschnitt an der einen Seite des erfassten Fahrzeugs und die andere Linie zu einem detektierten Bildpunkt oder Bildpunktabschnitt an der anderen Seite des Fahrzeugs läuft, wobei der Quotient aus dem ersten Winkel oder dem ersten Maß und dem zweiten Winkel oder dem zweiten Maß als Maß für die Ermittlung eines Ein- oder Ausschervorgangs dient.

3. Verfahren nach Anspruch 2,

**dadurch gekennzeichnet,**
**dass** der zweite Winkel oder das zweite Maß durch Subtraktion des Winkels zwischen den virtuellen Linien vom gemeinsamen Startpunkt zum rechten Bildpunkt oder Bildabschnitt und zur Fahrbahnmarkierung und dem Winkel zwischen den virtuellen Linien vom gemeinsamen Startpunkt zum linken Bildpunkt oder Bildabschnitt und zur Fahrbahnmarkierung ermittelt wird.

4. Verfahren nach einem der vorangehenden Ansprüche,
   **dadurch gekennzeichnet,**
   **dass** als ausgezeichneter Bildpunkt oder Bildabschnitt das linke oder rechte untere Eck einer das Fahrzeug umgebenden dargestellten oder virtuellen Bildmarkierung ermittelt wird.

5. Verfahren nach einem der vorangehenden Ansprüche,
   **dadurch gekennzeichnet,**
   **dass** ein Winkel oder ein Maß anhand der Anzahl an Pixeln einer horizontalen Pixellinie des Bilds zwischen einem detektierten Bildpunkt oder Bildabschnitt zur detektierten Fahrbahnmarkierung oder zwischen zwei Bildpunkten oder Bildabschnitten ermittelt wird.

6. Kraftfahrzeug ausgebildet zur Durchführung des Verfahrens nach einem der vorangehenden Ansprüche, umfassend ein der Längsführung dienendes Fahrerassistenzsystem mit einer Steuerungseinrichtung und eine das Fahrzeugvorfeld in Form zweidimensionaler Bilder aufnehmenden Kamera,
   **dadurch gekennzeichnet,**
   **dass** die mit der Kamera (7) kommunizierende Steuerungseinrichtung (3) zur Detektion wenigstens einer die eigene Fahrspur (10) begrenzenden Fahrbahnmarkierung (15, 16) und wenigstens eines von einem vorausfahrenden Fahrzeug (8, 9) definierten Bildpunkts (13, 14) oder Bildabschnitts in einem aufgenommenen Bild sowie zur Ermittlung wenigstens eines Winkels ($\alpha$) oder eines Maßes für einen Winkel ($\alpha$) zwischen zwei virtuellen Linien (Lm, Ll, Lr) im Bild, die gemeinsam von einem definierten Startpunkt (S), der insbesondere der Position der Kamera entspricht, ausgehen, wobei die eine Linie (Ll, Lm) zu einem detektierten Bildpunkt (13, 14) oder Bildabschnitt am Fahrzeug (8, 9) und die andere zu der Fahrspurmarkierung (15, 16) läuft und beide Linien (Lm, Ll, Lr) den Bildpunkt (13, 14) oder Bildabschnitt und die Fahrspurmarkierung (15, 16) auf gleicher horizontaler Bildebene schneiden, welcher Winkel ($\alpha$) oder welches Maß als Maß für die Ermittlung eines Ein- oder Ausschervorgangs dient, sowie zur Steuerung des Längsführungssystems (2) unter Berücksichtigung des Ermittlungsergebnisses ausgebildet ist.

7. Kraftfahrzeug nach Anspruch 6,
   **dadurch gekennzeichnet,**
   **dass** die Steuerungseinrichtung (3) zur Ermittlung eines zweiten Winkels ($\beta$) oder eines zweiten Maßes für einen zweiten Winkel ($\beta$) zwischen zwei virtuellen Linien (Ll, Lm) im Bild, die gemeinsam von dem definierten Startpunkt (S) ausgehen, wobei die eine Linie (Ll) zu einem detektierten Bildpunkt (13) oder Bildabschnitt an der einen Seite des erfassten Fahrzeugs (8, 9) und die andere Linie (Lm) zu einem detektierten Bildpunkt (14) oder Bildpunktabschnitt an der anderen Seite des Fahrzeugs (8, 9) läuft, wobei der Quotient aus dem ersten Winkel ($\alpha$) oder dem ersten Maß und dem zweiten Winkel ($\beta$) oder dem zweiten Maß als Maß für die Ermittlung eines Ein- oder Ausschervorgangs dient, ausgebildet ist.

8. Kraftfahrzeug nach Anspruch 7,
   **dadurch gekennzeichnet,**
   **dass** die Steuerungseinrichtung (3) zur Ermittlung des zweiten Winkels ($\beta$) oder des zweiten Maßes durch Subtraktion des Winkels zwischen den virtuellen Linien (Lr, Lm) vom gemeinsamen Startpunkt (S) zum rechten Bildpunkt (14) oder Bildabschnitt und zur Fahrbahnmarkierung (15, 16) und dem Winkel zwischen den virtuellen Linien (Ll, Lm) vom gemeinsamen Startpunkt (S) zum linken Bildpunkt (13) oder Bildabschnitt und zur Fahrbahnmarkierung (15, 16) ausgebildet ist.

9. Kraftfahrzeug nach einem der Ansprüche 6 bis 8,
   **dadurch gekennzeichnet,**
   **dass** seitens der Steuerungseinrichtung (3) ein detektiertes Fahrzeug mit einer vorzugsweise viereckigen Bildmarkierung (18) markierbar und ein Bildpunkt (13, 14) oder Bildabschnitt als ein unteres Eck der das Fahrzeug umgebenden Bildmarkierung (18) ermittelt wird.

10. Kraftfahrzeug nach einem der Ansprüche 6 bis 9,
    **dadurch gekennzeichnet,**
    **dass** die Steuerungseinrichtung (3) zur Ermittlung eines Winkels oder eines Maßes anhand der Anzahl an Pixeln (20) einer horizontalen Pixellinie (19) des Bilds zwischen einem detektierten Bildpunkt (13, 14) oder Bildabschnitt zur detektierten Fahrbahnmarkierung (15, 16) oder zwischen zwei Bildpunkten (13, 14) oder Bildabschnitten ausgebildet ist.

**Claims**

1. Method for determining a lane-changing process of a vehicle travelling in front of the motor vehicle in question, the motor vehicle in question comprising a driver assistance system used for longitudinal guidance and a camera which captures the region in front of the vehicle in the form of two-dimensional images,

**characterised in that**
in a captured image, at least one lane marking which delimits the lane in question being travelled in and at least one angle or one measurement for an angle between two virtual lines in the image, which both start from a defined starting point which in particular corresponds to the camera position, are determined, one line extending to a detected image point or image portion on the vehicle and the other extending to the lane marking and the lines intersecting the image point or image portion and the lane marking on the same horizontal image plane, which angle or which measurement is used as the measurement for determining a lane-changing process, a mere angle observation being made.

2. Method according to claim 1,
**characterised in that**
a second angle or a second measurement is determined for a second angle between two virtual lines in the image that both start from the defined starting point, one line extending to a detected image point or image portion on one side of the determined vehicle and the other line extending to a detected image point or image point portion on the other side of the vehicle, the quotient of the first angle or the first measurement and the second angle or the second measurement being used as the measurement for determining a lane-changing process.

3. Method according to claim 2,
**characterised in that**
the second angle or the second measurement is determined by subtracting the angle between the virtual lines extending from the common starting point to the right-hand image point or image portion and to the lane marking, and the angle between the virtual lines extending from the common starting point to the left-hand image point or image portion and to the lane marking.

4. Method according to any of the preceding claims,
**characterised in that**
the left-hand or right-hand lower corner of a depicted or virtual image marking which surrounds the vehicle is identified as a distinguished image point or image portion.

5. Method according to any of the preceding claims,
**characterised in that**
an angle or a measurement is determined on the basis of the number of pixels in a horizontal line of pixels in the image between a detected image point or image portion and the detected lane marking or between two image points or image portions.

6. Motor vehicle designed to carry out the method according to any of the preceding claims, comprising a driver assistance system which is used for longitudinal guidance and has a control device and a camera which captures the region in front of the vehicle in the form of two-dimensional images,
**characterised in that**
the control device (3) which communicates with the camera (7) is designed to detect at least one lane marking (15, 16), which delimits the lane (10) in question, and at least one image point (13, 14) or image portion defined by a vehicle (8, 9) travelling in front in a captured image, and to determine at least one angle ($\alpha$) or one measurement for an angle ($\alpha$) between two virtual lines (Lm, Ll, Lr) in the image that both start from a defined starting point (S) which in particular corresponds to the position of the camera, one line (Ll, Lm) extending to a detected image point (13, 14) or image portion on the vehicle (8, 9) and the other extending to the lane marking (15, 16) and both lines (Lm, Ll, Lr) intersecting the image point (13, 14) or image portion and the lane marking (15, 16) in the same horizontal image plane, which angle ($\alpha$) or which measurement is used as the measurement for determining a lane-changing process, and to control the longitudinal guiding system (2) on the basis of the result of the detection.

7. Motor vehicle according to claim 6,
**characterised in that**
the control device (3) is designed to determine a second angle ($\beta$) or a second measurement for a second angle ($\beta$) between two virtual lines (Ll, Lm) in the image, which both start from the defined starting point (S), one line (Ll) extending to a detected image point (13) or image portion on one side of the detected vehicle (8, 9), and the other line (Lm) extending to a detected image point (14) or image point portion on the other side of the vehicle (8, 9), the quotient of the first angle ($\alpha$) or the first measurement and the second angle ($\beta$) or the second measurement being used as the measurement for determining a lane-changing process.

8. Motor vehicle according to claim 7,
**characterised in that**
the control device (3) is designed to determine the second angle ($\beta$) or the second measurement by subtracting the angle between the virtual lines (Lr, Lm) extending from the common starting point (S) to the right-hand image point (14) or image portion and to the lane marking (15, 16), and the angle between the virtual lines (Ll, Lm) extending from the common starting point (S) to the left-hand image point (13) or image portion and to the lane marking (15, 16).

9. Motor vehicle according to any of claims 6 to 8,
**characterised in that**
a detected vehicle having a preferably square image marking (18) can be marked by the control device (3) and an image point (13, 14) or image portion is determined thereby as a lower corner of the image marking (18) surrounding the vehicle.

10. Motor vehicle according to any of claims 6 to 9, **characterised in that** the control device (3) is designed to determine an angle or a measurement on the basis of the number of pixels (20) in a horizontal line of pixels (19) in the image, between a detected image point (13, 14) or image portion and the detected lane marking (15, 16) or between two image points (13, 14) or image portions.

## Revendications

1. Procédé de détermination d'une action d'entrée dans la file ou de sortie de file d'un véhicule précédant le véhicule automobile considéré, le véhicule automobile considéré comprenant un système d'aide au conducteur qui sert au guidage longitudinal et une caméra qui filme sous forme d'images en deux dimensions l'espace devant le véhicule, **caractérisé en ce que**, dans une image enregistrée, on détermine au moins un marquage de voie de circulation délimitant la voie de circulation considérée sur laquelle le véhicule automobile considéré roule ainsi qu'au moins un angle ou une mesure pour un angle entre deux lignes virtuelles dans l'image qui partent ensemble d'un point de départ défini correspondant notamment à la position de la caméra, une ligne allant vers un point ou tronçon d'image détecté sur le véhicule et l'autre ligne allant vers le marquage de voie de circulation et les lignes coupant le point ou tronçon d'image et le marquage de voie de circulation dans le même plan d'image horizontal, lequel angle ou mesure sert de mesure pour la détermination d'une action d'entrée dans la file ou de sortie de file, seule une prise en compte d'angles étant effectuée.

2. Procédé selon la revendication 1, **caractérisé en ce qu'**on détermine un deuxième angle ou une deuxième mesure pour un deuxième angle entre deux lignes virtuelles dans l'image qui partent ensemble du point de départ défini, une ligne allant vers un point ou tronçon d'image détecté sur un côté du véhicule détecté et l'autre ligne allant vers un point ou tronçon d'image détecté sur l'autre côté du véhicule, le quotient du premier angle ou de la première mesure et du deuxième angle ou de la deuxième mesure servant de mesure pour la détermination d'une action d'entrée dans la file ou de sortie de file.

3. Procédé selon la revendication 2, **caractérisé en ce qu'**on obtient le deuxième angle ou la deuxième mesure par soustraction de l'angle entre les lignes virtuelles allant du point de départ commun au point ou tronçon d'image droit et au marquage de voie de circulation et de l'angle entre les lignes virtuelles allant du point de départ commun au point ou tronçon d'image gauche et au marquage de voie de circulation.

4. Procédé selon l'une des revendications précédentes, **caractérisé en ce que**, comme point ou tronçon d'image indiqué, on détermine le coin inférieur gauche ou droit d'un marquage d'image représenté ou virtuel entourant le véhicule.

5. Procédé selon l'une des revendications précédentes, **caractérisé en ce qu'**on détermine un angle ou une mesure à l'aide du nombre de pixels d'une ligne de pixels horizontale de l'image entre un point ou tronçon d'image détecté et le marquage de voie de circulation détecté ou entre deux points ou tronçons d'image.

6. Véhicule automobile conçu pour la mise en oeuvre du procédé selon l'une des revendications précédentes, comprenant un système d'aide au conducteur servant de guidage longitudinal avec un dispositif de commande et une caméra filmant sous forme d'images en deux dimensions l'espace devant le véhicule, **caractérisé en ce que** le dispositif de commande (3) communiquant avec la caméra (7) est conçu pour la détection d'au moins un marquage de voie de circulation (15, 16) délimitant une voie de circulation (10) et d'au moins un point ou tronçon d'image (13, 14) défini par un véhicule roulant devant (8, 9) ainsi que pour la détermination d'au moins un angle (a) ou d'une mesure pour un angle (a) entre deux lignes virtuelles (Lm, Ll, Lr) dans l'image qui partent ensemble d'un point de départ défini (S) correspondant notamment à la position de la caméra, une ligne (Ll, Lm) allant vers un point ou tronçon d'image (13, 14) détecté sur le véhicule (8, 9) et l'autre ligne allant vers le marquage de voie de circulation (15, 16) et les deux lignes (Lm, Ll, Lr) coupant le point ou tronçon d'image (13, 14) et le marquage de voie de circulation (15, 16) dans le même plan d'image horizontal, lequel angle (a) ou mesure sert de mesure pour la détermination d'une action d'entrée dans la file ou de sortie de file, ainsi que pour la commande du système de guidage longitudinal (2) en tenant compte du résultat de détermination.

7. Véhicule automobile selon la revendication 6, **caractérisé en ce que** le dispositif de commande (3) est conçu pour la détermination d'un deuxième angle (ß) ou d'une deuxième mesure pour un deuxième angle (ß) entre deux lignes virtuelles (Ll, Lm) dans l'image qui partent ensemble du point de départ défini (S), une ligne (Ll) allant vers un point ou tronçon d'image (13) détecté sur un côté du véhicule détecté (8,9) et l'autre ligne (Lm) allant vers un point ou tronçon d'image (14) détecté sur l'autre côté du véhicule (8, 9), le quotient du premier angle (a) ou de la première mesure et du deuxième angle (ß) ou de la deuxième mesure servant de mesure pour la détermination d'une action d'entrée dans la file ou de sortie de file.

8. Véhicule automobile selon la revendication 7, **caractérisé en ce que** le dispositif de commande (3) est conçu pour la détermination du deuxième angle (ß) ou de la deuxième mesure par soustraction de l'angle entre les lignes virtuelles (Lr, Lm) allant du point de départ commun (S) au point ou tronçon d'image droit (14) et au marquage de voie de circulation (15, 16) et de l'angle entre les lignes virtuelles (Ll, Lm) allant du point de départ commun (S) au point ou tronçon d'image gauche (13) et au marquage de voie de circulation (15, 16).

9. Véhicule automobile selon l'une des revendications 6 à 8, **caractérisé en ce que**, du côté du dispositif de commande (3), un véhicule détecté peut être marqué avec un marquage d'image (18) de préférence rectangulaire et un point ou tronçon d'image (13, 14) est déterminé comme coin inférieur du marquage d'image (18) entourant le véhicule.

10. Véhicule automobile selon l'une des revendications 6 à 9, **caractérisé en ce que** le dispositif de commande (3) est conçu pour la détermination d'un angle ou d'une mesure à l'aide du nombre de pixels (20) d'une ligne de pixels horizontale (19) de l'image entre un point ou tronçon d'image détecté (13, 14) et le marquage de voie de circulation (15, 16) détecté ou entre deux points ou tronçons d'image (13, 14).

**FIG. 1**

**FIG. 2**

FIG. 3

# FIG. 4

| α | <<0 | <0 | <0 | =0 | >0 |
|---|-----|-----|------|-----|-----|
| LE | <1 | =1 | =0,5 | =0 | >0 |

| α | >>0 | >0 | >0 | =0 | <0 |
|---|-----|-----|------|-----|-----|
| LE | >1 | =1 | =0,5 | =0 | <0 |

EP 2 287 060 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1577682 A1